# EUROPEAN PATENT SPECIFICATION

(11) **EP 0 445 890 B1**
(45) Date of publication and mention of the grant of the patent: **14.07.1993**
(21) Application number: 91200474.4
(22) Date of filing: 05.03.1991
(51) Int. Cl.: G01G 11/00, G01G 19/03

(54) **Conveyor**
Förderer
Transporteur

(30) Priority: 09.03.1990 NL 9000550
(43) Date of publication of application: 11.09.1991
(73) Proprietor: VANDERLANDE INDUSTRIES NEDERLAND B.V., NL-5466 RB Veghel (NL)
(72) Inventor: Bodewes, Harmannus Josephus Arnoldus, NL-5403 LC Uden (NL)
(74) Representative: Vollebregt, Cornelis Jacobus, Ir.

(56) References cited:
- DE-A- 3 432 305
- DE-B- 1 302 676
- GB-A- 2 214 646
- US-A- 4 901 808

## Description

The invention relates to a conveyor for moving objects in an intended direction of movement, said conveyor being provided with a weighing station equipped with a weighing mechanism, as well as with conveying means, which form a horizontal conveying plane, for moving said objects through the weighing station, whilst conveying means disposed apart from the weighing station are provided both upstream and downstream of said weighing station, when seen in the intended direction of movement of the objects, so as to supply objects to the weighing station or discharge objects from the weighing station, as the case may be.

Such a conveyor is known from DE-A-3,432,305. With this known construction the conveying means associated with the weighing station are vertically movable with respect to the weighing mechanism. When an object to be weighed has been placed in the weighing station the conveying means are also moved downwards with respect to the weighing mechanism, so that the object will come to rest on the weighing mechanism. After weighing has taken place the conveying means are again moved upwards with respect to the weighing mechanism, so as to discharge the object present in the weighing station towards the conveying means disposed downstream of the weighing station. When this construction is used weighing cannot take place before the object is present on the weighing mechanism and has come to a standstill. This takes a certain amount of time and this time influences the speed with which the objects to be weighed can be moved by means of the conveyor.

US-A-4,901,808 discloses a conveyor wherein an object to be weighed is placed on a table provided with an opening. When the object rests on the table said table is moved downwards, so that the object will come to rest on a weighing device disposed near the opening provided in the table. After the weight of the object has been determined by means of the weighing device the table is moved upwards again with respect to the weighing device, after which the object can be conveyed further. This known device has the same disadvantages as the device according to DE-A-3,432,305.

DE-A-1,302,676 discloses a conveyor wherein belt conveyors for supplying or discharging objects to or from the weighing station are disposed on both sides of a weighing station. In addition to said belt conveyors another belt conveyor is provided, whereby an at least substantially horizontally extending upper part of said belt conveyor extends both above the weighing station and above the belt conveyors disposed on both sides of the weighing station. The belt conveyors are thereby built up of belts located side by side, and the belts of said belt conveyors disposed on both sides of the weighing station are vertically adjustable between the belts of the conveyor extending above said belt conveyors and the weighing mechanism and through the slots provided in the ends of a weighing table of the weighing station. This design of the conveyor leads to a complicated construction.

From GB-A-2,214,646 a conveying unit is known wherein objects are supplied to a weighing drum by means of a conveyor that slopes upwards in the direction of movement of the objects, a downwardly sloping conveyor connecting to the downstream side of said weighing drum. During operation an object is placed on the weighing drum by means of the conveyor disposed upstream of said weighing drum, whereby the object, when passing the weighing drum, at a certain moment tilts about its point of contact with the drum, from a position in which the rear end of the object still rests on the upstream conveyor into a position in which the front end of the object rests on the conveyor disposed downstream of the weighing drum. During this tilting movement there will be a short period when the object is exclusively supported by the weighing drum. During this short period the weight of the object must be determined by the weighing drum. With such a construction it can hardly be prevented that the measuring is influenced by vibrations produced by the rotating measuring drum and the object moving across said measuring drum, which cannot be damped during the short period during which the measuring must take place and which have an adverse effect on the measurement.

The object of the invention is to obtain a conveyor of the above kind, wherein the drawbacks of the known devices can be avoided.

According to a first aspect of the invention this can be achieved in that the conveying means associated with the weighing station, together with the weighing mechanism on the one hand and the conveying means disposed upstream and downstream on the other hand, are disposed so as to be vertically adjustable with respect to each other.

When using this construction a simple design of the conveyor can be achieved, whereby the conveying means associated with the weighing mechanism are entirely independent of the conveying means by which objects are supplied to or discharged from the weighing station, as the case may be, whilst during the movement of the object through the weighing station by means of the conveying means associated with the weighing station there is sufficient time to damp any vibrations caused by the introduction of the object into the weighing station, so that a particularly accurate weighing can be effected.

According to a second aspect of the invention the conveying means disposed upstream of the weighing station and those disposed downstream of the weighing station slope downwards from the ends of the conveying means of the weighing station forming the horizontal conveying plane, in a direction away from the weighing station. Also here a simple design of the conveyor is achieved, whereby the conveying means associated with the weighing station are independent of the conveying means disposed on both sides of the weighing station, whilst also here the object is present in the weighing station sufficiently long for the vibrations occurring when the object is introduced into the weighing station to be damped, so that also here an accurate measuring of the object can be achieved, without it being necessary to stop the movement of the object.

The invention will be explained in more detail hereafter, with reference to a few possible embodiments of the construction according to the invention diagrammatically illustrated in the accompanying Figures.

Figure 1 diagrammatically shows a first embodiment of a conveyor according to the invention, in a first operating position.

Figure 2 shows the conveyor of Figure 1, in a second operating position.

Figure 3 diagrammatically shows a second embodiment of a conveyor according to the invention, in a first operating position.

Figure 4 shows the conveyor illustrated in Figure 3, in a second operating position.

Figure 5 diagrammatically shows a conveyor according to the invention, in a first operating position.

Figure 6 shows the device illustrated in Figure 5, in a second operating position.

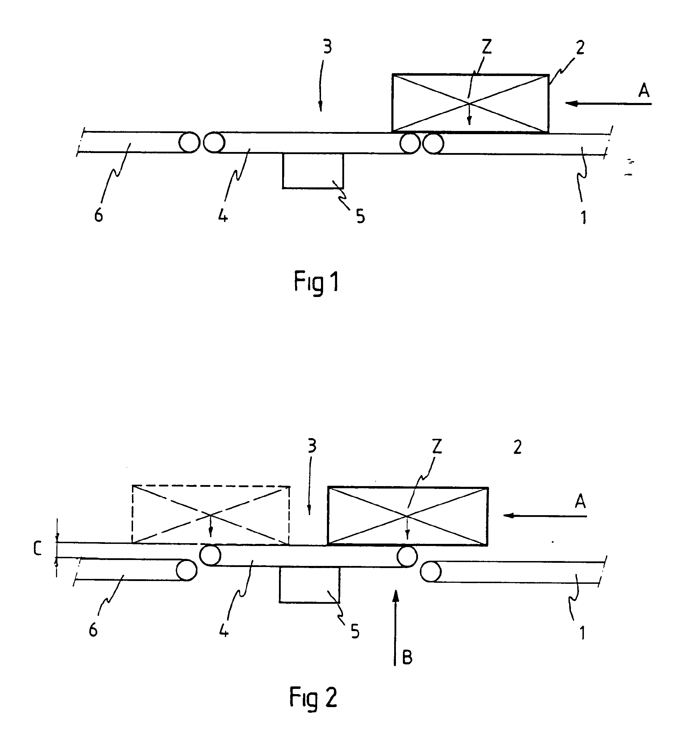

The conveyor illustrated in Figure 1 comprises a first conveying mechanism 1, which is an endless conveyor belt in the embodiment which is diagrammatically illustrated in Figure 1. With this conveying mechanism 1 forming part of the conveyor objects such as packs 2 can be moved in the direction according to the arrow A towards a weighing mechanism 3, which also forms part of the conveyor according to the invention.

Said weighing mechanism comprises means for moving the objects 2 in the intended direction of movement according to the arrow A, said means being an endless conveyor belt 4 in this embodiment. Said weighing mechanism 3 furthermore comprises a diagrammatically indicated weighing element 5, by means of which an object 2 resting on the conveyor belt 4 can be weighed while said object 2 is being moved in the intended direction of movement according to the arrow A by means of the conveyor belt 4. Such a weighing mechanism built up of means for moving objects and a weighing element for determining the weight of such a moving object is known per se, it does not form part of the invention and will not be further discussed herein, therefore.

At the downstream side of the weighing mechanism, when seen in the intended direction of movement according to the arrow A, the conveyor is provided with a conveying mechanism 6 for discharging objects 2, which have been moved across the weighing mechanism. In the illustrated embodiment an endless conveyor belt again constitutes the conveying mechanism 6.

When an object 2 is being supplied to the weighing mechanism, by means of the conveying mechanism disposed upstream of the weighing mechanism, the upper surfaces of the various conveyor belts 1, 4 and 6 will at least substantially lie in one plane, as is illustrated in Figure 1, so that the object 2 can be evenly delivered from the upper surface of the conveyor belt 1 to the upper surface fo the conveyor belt 4. As soon as the centre of gravity Z of the object has reached a position in which said centre of gravity is located above the upper surface of the conveyor belt 4, in accordance with the invention the weighing mechanism 3 will be moved upwards in the direction according to the arrow B, by means of a lifting mechanism (not shown), into the position illustrated in Figure 2.

The presence of the centre of gravity Z of the object at a point above the upper surface of the conveyor belt 4 can e.g. be established by means of sensors, which detect the position of the object present on the conveyor and, dependent on the position of said object, actuate the mechanism for moving the weighing mechanism up or down.

From Figure 2 it will be apparent that as soon as the weighing mechanism has been moved upwards along a distance C with respect to the conveying mechanisms 1 and 6, the object 2 will be exclusively supported by the weighing mechanism, in spite of the fact that at least part of the object initially extends above the weighing mechanism 1. In the position illustrated in Figure 2 the object can be moved from the position indicated by full lines in Figure 2 into the position indicated by dotted lines in Figure 2, in which position the centre of gravity Z of the object is located near the discharge end of the conveyor belt 4, and the object already partially extends above the conveying mechanism 6, without being in contact therewith. Before the centre of gravity of the object moves past the end of the weighing mechanism 3, said weighing mechanism 3 is returned to the position illustrated in Figure 2, so that the object can gradually be transferred from the weighing mechanism 3 to the conveying mechanism 6, whilst simultaneously a new object can be supplied to the weighing mechanism 3 by means of the conveying mechanism 1.

From the above it will be apparent that when the above-described device is used weighing can take place during the period when the centre of gravity of the object is moving from the upstream end of the weighing device towards the downstream end of the weighing device, when seen in the direction of movement according to the arrow A, in contrast to the known devices, whereby weighing could not start before the object rested entirely on the weighing device, and whereby weighing had to be completed before the leading end of the object arrived at the downstream conveying mechanism for discharging the objects. When using the construction according to the invention the object is thus exclusively supported by the weighing mechanism along a larger part of its way across the conveyor than is the case with the known devices, which makes it possible to increase the rate of displacement of the objects across the conveyor, and with it the capacity of the conveyor.

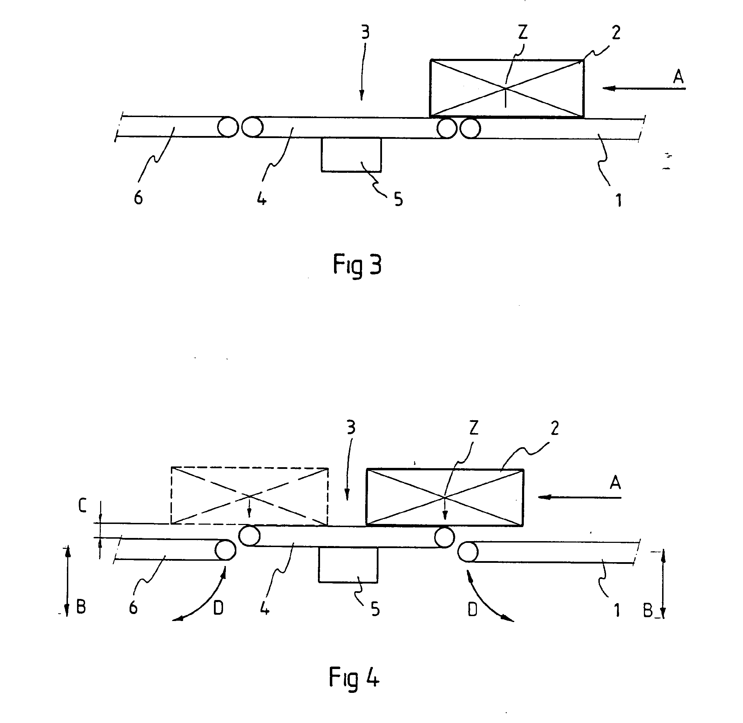

Of course variations to the above-described embodiments are possible within the scope of the invention as claimed, as is illustrated in more detail in Figures 3 - 6. In these Figures those parts that correspond with parts illustrated in Figures 1 and 2 have been given the same reference numerals as in Figure 1.

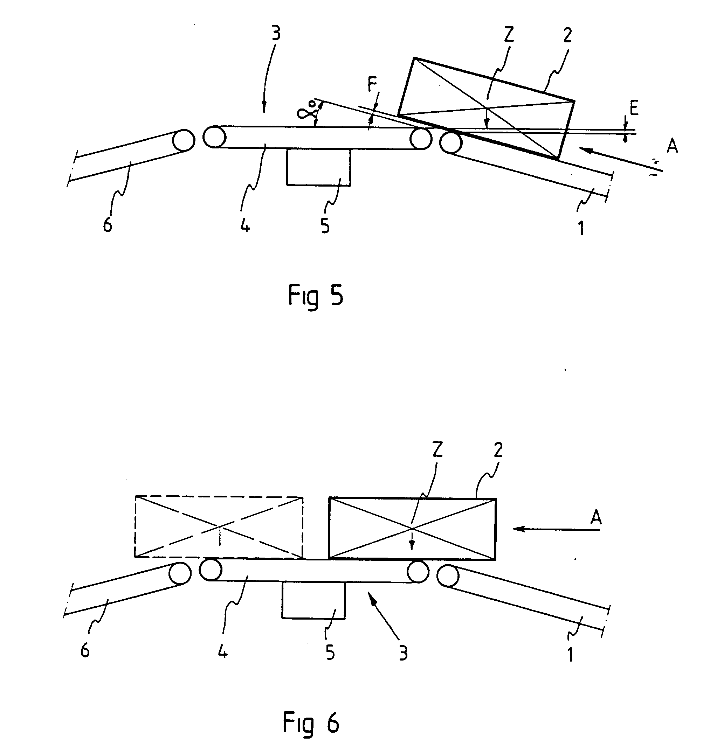

With the embodiments of Figures 3 and 4 the weighing mechanism 3 has a stationary arrangement, whilst at least the ends of the conveying mechanisms 1 and 6 located near the weighing mechanism can move up and down, as is indicated by the arrows B. Such a movement of the ends of the conveying mechanisms 1 and 6 located near the weighing mechanism 5 can be effected by providing said mechanisms in such a manner that they can move up and down as a whole, or by constructing the conveying mechanisms such that the ends of the conveying mechanisms 1 and 6 located near the weighing mechanism 5 are pivotable according to the arrow D, about horizontally extending pivot pins (not shown) disposed spaced from the weighing mechanism 5.

With the embodiment illustrated in Figures 5 and 6 the mechanism 1 for supplying the objects 2 to the weighing mechanism 3 slopes upwards, at an angle α, in the direction of the weighing mechanism 5. The conveying mechanism 6 for discharging objects in a direction away from the weighing mechanism 3 slopes downwards from the weighing mechanism 3. The highest points of the conveying mechanisms 1 and 6 are thereby located below the upper surface of the conveyor belt 4, spaced therefrom by a small distance E. An arriving object resting on the conveyor belt 1, or an object moving away on the conveyor belt 6, as the case may be, will thereby have no contact with the conveyor belt 4 along a small distance F when one end of said object extends beyond the conveyor belt in question.

As will be apparent from Figures 5 and 6, however, as soon as the centre of gravity of an object has moved past the end of the conveyor belt 1 directed towards the weighing mechanism 3, the object will tilt from the position illustrated in Figure 5 into the position illustrated in Figure 6, in which position the object 2 rests on the conveyor belt 4, whilst the rear end of the object still extends above the conveyor belt 1. Weighing can again be done while the object is moving from the position indicated by full lines in Figure 6, in which the rear end of the object is still located above the conveyor belt 1, to the position indicated by dotted lines in Figure 6, in which the front end of the object is already located above the conveyor belt 6, whilst the centre of gravity of the object is located near the discharge end of the conveyor belt 4. When the object 6 moves a little further in the intended direction of movement according to the arrow A, the centre of gravity of the object will move past the end of the conveyor belt 4, as a result of which the object will tilt into a position in which the object 2 will come to rest on the conveyor belt 6.

In the illustrated embodiments of the conveyor according to the invention use is made of endless conveyor belts for moving the objects. It will be apparent, however, that also other conveying mechanisms can be used, such as e.g. conveying mechanisms having rollers, chutes and the like.

## Claims

1. A conveyor for moving objects (2) in an intended direction of movement (A), said conveyor being provided with a weighing station (3) equipped with a weighing mechanism (5), as well as with conveying means (4), which form a horizontal conveying plane, for moving said objects through the weighing station, whilst conveying means (1, 6) disposed apart from the weighing station are provided both upstream and downstream of said weighing station, when seen in the intended direction of movement (A) of the objects (2), so as to supply objects to the weighing station (3) or discharge objects from said weighing station, as the case may be, characterized in that the conveying means (4) associated with the weighing station (3), together with the weighing mechanism (5) on the one hand and the conveying means (1, 6) disposed upstream and downstream on the other hand, are disposed so as to be vertically adjustable with respect to each other.

2. A conveyor according to claim 1, characterized in that the conveying means associated with the weighing station can move up and down along with the weighing mechanism.

3. A conveyor according to claim 1 or 2, characterized in that the ends of the conveying means (1, 6) arranged upstream and downstream of the weighing station (3) are vertically adjustable.

4. A conveyor for moving objects (2) in an intended direction of movement (A), said conveyor being provided with a weighing station (3) equipped with a weighing mechanism (5), as well as with conveying means (4), which form a horizontal conveying plane, for moving said objects through the weighing station, whilst conveying means (1, 6) disposed apart from the weighing station are provided both upstream and downstream of said weighing station, when seen in the intended direction of movement (A) of the objects (2), so as to supply objects to the weighing station (3) or discharge objects from said weighing station, as the case may be, characterized in that the conveying means (1, 6) disposed upstream of the weighing station (3) and those disposed downstream of said weighing station slope downwards from the ends of the conveying means of the weighing station forming the horizontal conveying plane, in a direction away from the weighing station.

## Patentansprüche

1. Förderer zum Bewegen von Objekten (2) in eine beabsichtigte Bewegungsrichtung (A), wobei der Förderer mit einer mit einem Wiegemechanismus (5) ausgestatteten Wiegestation (3) und mit Fördermitteln (4) versehen ist, die eine horizontale Förderebene bilden, um die Objekte durch die Wiegestation zu bewegen, während entfernt von der Wiegestation angeordnete Fördermittel (1,6) sowohl vor als auch nach der Wiegestation, gesehen in der beabsichtigten Bewegungsrichtung (A) der Objekte (2), angeordnet sind, so daß Objekte, je nach Situation, der Wiegestation (3) zugeführt oder von der Wiegestation abgeführt werden, dadurch gekennzeichnet, daß die mit der Wiegestation (3) verbundenen Fördermittel (4) zusammen mit dem Wiegemechanismus (5) einerseits und die in Förderrichtung vorher und nachher angeordneten Fördermittel (1,6) andererseits so angeordnet sind, daß sie relativ zueinander vertikal eingestellt werden können.

2. Förderer nach Anspruch 1, dadurch gekennzeichnet, daß sich die mit der Wiegestation verbundenen Fördermittel gemeinsam mit dem Wiegemechanismus nach oben und unten bewegen können.

3. Förderer nach Anspruch 1 oder 2, dadurch gekennzeichnet, daß die Enden der in Förderrichtung vor und nach der Wiegestation (3) angeordneten Fördermittel (1, 6) vertikal einstellbar sind.

4. Förderer zum Bewegen von Objekten (2) in eine beabsichtigte Bewegungsrichtung (A), wobei der Förderer mit einer mit einem Wiegemechanismus (5) ausgestatteten Wiegestation (3) und mit Fördermitteln (4) versehen ist, die eine horizontale Förderebene bilden, um die Objekte durch die Wiegestation zu bewegen, während entfernt von der Wiegestation angeordnete Fördermittel (1,6) sowohl vor als auch nach der Wiegestation, gesehen in der beabsichtigten Bewegungsrichtung (A) der Objekte (2), angeordnet sind so daß Objekte je nach Situation der Wiegestation (3) zugeführt oder von der Wiegestation abgeführt werden, dadurch gekennzeichnet, daß die vor der Wiegestation (3) angeordneten Fördermittel (1,6) und die, welche nach der Wiegestation angeordnet sind, von den Enden der Fördermittel der Wiegestation, welche die horizontale Förderebene bilden, in einer von der Wiegestation weg weisenden Richtung nach unten geneigt sind.

## Revendications

1. Convoyeur pour déplacer des objets (2) dans un sens voulu de mouvement (A), ledit convoyeur étant pourvu d'un poste de pesage (3) équipé d'un mécanisme de pesage (5), et aussi d'un moyen de convoyage (4) qui forme un plan horizontal de convoyage pour déplacer lesdits objets dans ledit poste de pesage, tandis que des moyens de convoyage (1, 6) placés en dehors du poste de pesage sont placés à la fois en amont et en aval dudit poste de pesage, quand on considère le sens souhaité (A) du mouvement des objets (2), de façon à, suivant le cas, amener les objets au poste de pesage (3) ou à évacuer les objets dudit poste de pesage, **caractérisé** en ce que le moyen de convoyage (4) associé au poste de pesage (3) ainsi que le mécanisme de pesage (5) d'une part, et les moyens de convoyage (1, 6) placés en amont et en aval d'autre part, soient disposés de façon à pouvoir être réglés verticalement' les uns par rapport aux autres.

2. Convoyeur suivant la revendication 1, **caractérisé** en ce que le moyen de convoyage associé au poste de pesage peut être déplacé vers le haut et vers le bas en même temps que le mécanisme de pesage.

3. Convoyeur suivant la revendication 1 ou 2, **caractérisé** en ce que les extrémités des moyens de convoyage (1, 6) situés en amont et en aval du poste de pesage (3) sont réglables verticalement.

4. Convoyeur pour déplacer des objets (2) dans un sens voulu de mouvement (A), ledit convoyeur étant pourvu d'un poste de pesage (3) équipé d'un mécanisme de pesage (5), et aussi d'un moyen de convoyage (4) qui forme un plan horizontal de convoyage pour déplacer lesdits objets dans ledit poste de pesage, tandis que des moyens de convoyage (1, 6) placés en dehors du poste de pesage sont placés à la fois en amont et en aval dudit poste de pesage, quand on considère le sens souhaité (A) du mouvement des objets (2), de façon à, suivant le cas, amener les objets au poste de pesage (3) ou évacuer les objets dudit poste de pesage, **caractérisé** en ce que le moyen de convoyage placé en amont du poste de pesage (3) et celui placé en aval dudit poste de pesage sont inclinés vers le bas, à partir des extrémités du moyen de convoyage du poste de pesage qui forme un plan horizontal de convoyage, et en s'éloignant du poste de pesage.
